# EUROPÄISCHE PATENTSCHRIFT

(11) **EP 2 207 019 B1**
(45) Veröffentlichungstag und Bekanntmachung des Hinweises auf die Patenterteilung: **27.02.2019**
(21) Anmeldenummer: 09150238.5
(22) Anmeldetag: 08.01.2009
(51) Int. Cl.: G01G 21/22, G01G 17/04, B01L 3/00, B01L 9/06

(54) **Wägegutträger für eine Waage**
Weighed goods holder for a weighing machine
Support de produit à peser pour une balance

(43) Veröffentlichungstag der Anmeldung: 14.07.2010
(73) Patentinhaber: Mettler-Toledo GmbH, 8606 Greifensee (CH)
(72) Erfinder: Lüchinger, Paul, 8610 Uster (CH)
(74) Vertreter: Mettler-Toledo

(56) Entgegenhaltungen:
- EP-A- 1 674 840
- JP-A- 9 264 894
- US-A- 4 287 155

## Beschreibung

Die Erfindung betrifft einen Wägegutträger für eine Waage oder Wägezelle, welcher so gestaltet ist, dass er auf einfache Weise mit dem Lastaufnehmer der Wägezelle verbindbar ist und welcher gegenüber bekannten Lösungen insbesondere den Vorteil hat, dass serielle Mehrfacheinwägungen oder gravimetrische Dosierungen rationeller und ohne grossen technischen Aufwand durchgeführt werden können.

Eine bekannte Anordnung zum Dosieren von vorbestimmten Substanzmengen kann zum Beispiel eine elektronische Laborwaage, ein Dosiergerät mit einem Vorratsbehälter und einem Dosierkopf sowie ein elektronisches Steuergerät, beispielsweise einen Mikrocomputer umfassen. Das Dosiergerät ist so angeordnet, dass sich die Auslassöffnung des Dosierkopfes oberhalb der Waagschale befindet. Der Vorratsbehälter wird mit dem Dosiergut gefüllt und ein Einwaagegefäss wird auf der Waagschale zentrisch unter der Auslassöffnung des Dosierkopfes platziert. Die Waage, das Steuergerät und das Dosiergerät bilden einen geschlossenen Regelkreis, in welchem das Steuergerät von der Waage ständig das aktuelle Gewicht der Substanz im Einwaagegefäss empfängt, dieses Gewichtssignal mit einem vorbestimmten Zielgewicht vergleicht und aufgrund der Differenz zwischen dem aktuellen Gewicht und dem Zielgewicht ein Steuersignal an den Dosierkopf abgibt. Mit diesem Steuersignal kann das Ausfliessen der Substanz aus dem Dosiergerät in das Einwaagegefäss gesteuert werden, so dass beispielsweise der Substanzfluss bei Annäherung an das Zielgewicht verlangsamt und beim Erreichen des Zielgewichts gestoppt wird, wobei auch die jeweils im freien Fall begriffene Substanzmenge durch einen zeitlichen Vorhalt berücksichtigt werden kann.

Bei seriellen Mehrfacheinwägungen oder gravimetrischen Dosierungen mit der vorstehend beschriebenen bekannten Anordnung werden die Einwaagegefässe einzeln auf die Waagschale gesetzt, mit der Auslassöffnung der Dosiervorrichtung ausgerichtet und nach erfolgtem Dosiervorgang wieder von der Waagschale entfernt. Wird dieser Vorgang manuell ausgeführt, so besteht abgesehen vom hohen Arbeitsaufwand auch die Gefahr des Verschüttens von Substanz oder des Verwechselns von Einwaagegefässen. Alternativ kann der Transport der Einwaagegefässe zu und von der Waagschale auch automatisiert werden, zum Beispiel mit einem sogenannten Autosampler oder einem Laborroboter. Dieser Aufwand lässt sich jedoch nur bei einem sehr hohen Arbeitsvolumen von Dosierungen rechtfertigen.

Die vorliegende Erfindung hat daher die Aufgabe, eine geeignete Hilfseinrichtung für eine Waage zu schaffen, die es erlaubt, serielle Mehrfacheinwägungen oder gravimetrische Dosierungen rationeller und ohne grossen technischen Aufwand durchzuführen, so dass die Einwaagegefässe rasch und einfach und insbesondere mit geringem manuellem Aufwand nacheinander präzise in eine definierte Position, beispielsweise unter die Auslassöffnung einer Dosiervorrichtung gebracht werden können.

Diese Aufgabe wird von einem Wägegutträger gemäss dem Anspruch 1 erfüllt. Detailaspekte und weiterentwickelte Ausführungsformen der Erfindung sind in den vom ersten Anspruch abhängigen Unteransprüchen definiert.

Ein Wägegutträger, welcher mit einem Lastaufnehmer einer Wägezelle verbindbar ist, umfasst eine Trägerstruktur und eine Mehrfachaufnahme. Die Trägerstruktur umfasst einerseits ein Kupplungsteil, mit welchem die Trägerstruktur am Lastaufnehmer der Waage oder Wägezelle angekoppelt werden kann und andrerseits eine Führung und Halterung, mit welcher die Mehrfachaufnahme beweglich mit der Trägerstruktur verbunden werden kann. Die Verbindung mit der Trägerstruktur erfolgt durch einfaches Auflegen oder Einschieben der Mehrfachaufnahme und erlaubt eine definierte Drehbewegung der Mehrfachaufnahme relativ zur Trägerstruktur. Ein Wägegutträger mit einer ähnlich ausgestalteten Trägerstruktur und einer Mehrfachaufnahme wird beispielsweise in der US 6 557 391 B2 offenbart, deren Inhalt hiermit vollumfänglich in die Beschreibung mit aufgenommen wird.

Die erfindungsgemässe Mehrfachaufnahme weist mindestens zwei Aufnahmestellen auf, welche so angeordnet sind, dass bei der erwähnten Drehbewegung der Mehrfachaufnahme jede der Aufnahmestellen nacheinander in eine bestimmte, feststehende Beschickungsposition bringbar ist. Demzufolge sind die Aufnahmestellen stets auf einer Kreisbahn oder einem Kreisbahnabschnitt angeordnet. Ferner ist eine, zwischen der Trägerstruktur und der Mehrfachaufnahme wirkende Positionierungsvorrichtung vorhanden, mittels welcher die in die Beschickungsposition zu bringende Aufnahmestelle präzise positionierbar ist. Die Positionierungsvorrichtung ist eine rein mechanisch wirkende Vorrichtung, so dass die Forderung nach einem geringen technischen Aufwand erfüllt werden kann.

Mit Beschickungsposition ist ein bestimmter, feststehender Ort im, den Wägegutträger umgebenden Raum gemeint. Das heisst, dass jede Aufnahmestelle eines einmal auf eine Beschickungsposition ausgerichteten Wägegutträgers mittels einer einfachen Drehbewegung der Mehrfachaufnahme an diesen feststehenden Ort gebracht werden kann, ohne dass wiederkehrend Justierarbeiten anfallen.

Da die Trägerstruktur mit dem Lastaufnehmer nur gekoppelt und nicht unlösbar verbunden ist, kann die Trägerstruktur problemlos entfernt und gereinigt werden, ohne umfangreiche Wartungsarbeiten an der Waage vornehmen zu müssen. Nebst einer einfacheren Reinigung der Trägerstruktur kann auch der Wägeraum der Waage nach dem Entfernen der Trägerstruktur besser gereinigt werden. Zudem kann das Risiko von Schäden an der Wägezelle infolge der Reinigung minimiert werden, da nach dem Entfernen der Trägerstruktur kein in den Wägeraum hineinragender Lastaufnehmer vorhanden ist.

Es ist zweckmässig, wenn die Trägerstruktur zwischen der Kupplung und der Führung und Halterung mindestens eine fixierbare Gelenkstelle und/oder mindestens ein teleskopisches Verbindungsglied aufweist. Eine Trägerstruktur mit einer ähnlich ausgestalteten Gelenkstelle und einem teleskopischen Verbindungsglied wird beispielsweise in der US 7 227 087 B2 offenbart, deren Inhalt hiermit vollumfänglich in die Beschreibung mit aufgenommen wird. Mit der Gelenkstelle und/oder dem teleskopischen Verbindungsglied kann die Trägerstruktur im Wägeraum derart ausgerichtet und fixiert werden, dass nach dem Einsetzen der Mehrfachaufnahme die in der Beschickungsposition befindliche Aufnahmestelle beispielsweise senkrecht unter der Auslassöffnung eines Dosiergerätes zentriert ist. Bei einer nachfolgenden Dosierserie verbleibt die Trägerstruktur unverändert an der Waage und nur die Mehrfachaufnahme wird aus der Waage herausgenommen.

In einer vorteilhaften Ausführungsform des Wägegutträgers ist die Positionierungsvorrichtung zur Trägerstruktur linear verschiebbar angeordnet. Zwischen der Trägerstruktur und der Positionierungsvorrichtung ist ein Federelement in der Weise angeordnet, dass infolge der Federkraft des Federelements die Positionierungsvorrichtung gegen eine Aussenkontur derjenigen Aufnahmestelle gepresst wird, welche sich momentan in der Beschickungsposition befindet. Vorzugsweise weist die Positionierungsvorrichtung zwei Positionierungsrollen auf, so dass die nachfolgende Aufnahmestelle ohne grossen, durch Reibung verursachten Kraftaufwand in die Beschickungsposition bringbar ist, wobei in der Beschickungsposition jeweils die Aussenkontur zwischen den beiden Positionierungsrollen angeordnet ist. Die Positionierungsvorrichtung hat dabei die Funktion, dass diejenige Aufnahmestelle, welche durch die oben beschriebene Drehbewegung der Mehrfachaufnahme am nächsten zur Beschickungsposition gebracht wurde, durch die gefederten Positionierungsrollen vollends in die Beschickungsposition gedrückt und dort festgehalten wird. Die Mehrfachaufnahme mit der Positionierungsvorrichtung hat somit die Fähigkeit, bei ihrer Schwenk- oder Drehbewegung in diskreten, genau definierten Positionen anzuhalten und dort zu verharren.

Wie weiter oben erwähnt, kann die Mehrfachaufnahme einfach auf die Trägerstruktur aufgesetzt oder in dieselbe eingeschoben werden. Insbesondere bei einer Anordnung des Wägegutträgers, wo die Mehrfachaufnahme von oben auf die Trägerstruktur aufgesetzt wird, ist es zweckmässig, wenn die Positionierungsrollen stirnseitig Fasen aufweisen, das heisst, angeschrägt sind. Beim Einsetzen der Mehrfachaufnahme in die Trägerstruktur können die Positionierungsrollen durch die Fasen an einer Kontur der Mehrfachaufnahme abgleiten und leicht zurückweichen, was das Einsetzen der Mehrfachaufnahme wesentlich erleichtert.

Die Mehrfachaufnahme eines erfindungsgemässen Wägegutträgers ist zweckmässigerweise mit einer Ausrichtungshilfe und/oder einem Positionszeiger versehen. Dies gewährleistet oder zumindest unterstützt das korrekte Einsetzen der Mehrfachaufnahme in einer Ausgangsstellung für eine Einwägeserie sowie den korrekten Abschluss der Serie nachdem eine vorgeschriebene Anzahl von Einwägungen ausgeführt wurde. Eine Ausrichtungshilfe kann beispielsweise als erhabene Spitze auf der Mehrfachaufnahme ausgebildet sein. Ferner kann ein Positionszeiger durch Aufsetzen eines Deckels auf einer der Aufnahmestellen realisiert werden, zum Beispiel zur variablen Kennzeichnung einer Endstellung.

Die Mehrfachaufnahme eines erfindungsgemässen Wägegutträgers ist zweckmässigerweise mit Identifikationsmitteln versehen. Damit kann einerseits die Mehrfachaufnahme von andern Mehrfachaufnahmen unterschieden werden und andrerseits können die einzelnen Aufnahmestellen innerhalb einer Mehrfachaufnahme durch eine Nummerierung gekennzeichnet sein. Diese Identifikationsmittel können einfache, für eine Bedienungsperson lesbare Beschriftungen sein, oder es sind auch elektronisch lesbare Lösungen denkbar, beispielsweise mit einem Barcode oder Matrixcode oder einem RFID Chip für die Mehrfachaufnahme und mit einer binärcodierten Kreisteilung für die Nummerierung der Aufnahmestellen. Im RFID Chip können ferner sogar Angaben zur zu dosierenden Substanz, zu Substanzmischrezepten oder gar zum Dosierverfahren eingespeichert sein.

In einer weiteren Ausführung des erfindungsgemässen Wägegutträgers ist die Mehrfachaufnahme mit auswechselbaren, kundenspezifisch gestalteten Aufnahmestellen ausgestattet. Zum Beispiel können die Aufnahmestellen als Vertiefungen zur direkten Aufnahme des Wägegutes gestaltet sein, oder auch als passend geformte Sitze für separate Einwägegefässe.

Ferner ist es bei jeder der vorstehend beschriebenen Ausführungsformen des Wägegutträgers vorteilhaft, wenn die Aufnahmestellen der Mehrfachaufnahme zumindest äusserlich becherförmig sind und insbesondere eine zylindrische Aussenkontur aufweisen.

Als ergonomische Massnahme ist die Mehrfachaufnahme zweckmässigerweise mit einer Rändelung oder mehreren Fingerkuhlen (Ausnehmungen oder Vertiefungen für den Fingereingriff) versehen. Damit kann der Vortrieb der Mehrfachaufnahme, um die Aufnahmestellen nacheinander in die Beschickungsposition zu bringen, durch eine leichte Fingerbewegung ohne erheblichen seitlichen Druck auf die Mehrfachaufnahme erfolgen. Selbstverständlich kann anstelle einer Fingerbetätigung auch ein geeignetes Betätigungswerkzeug, beispielsweise eine Stange mit einem Haken, vorhanden sein, so dass die Mehrfachaufnahme nicht mit dem Finger direkt bewegt werden muss.

Erfindungsgemäss ist vorgesehen, einen Wägegutträger entsprechend einer der oben beschiebenen Ausführungsformen in einem Laborgerät, insbesondere in einer Waage, in einer eine Wägezelle enthaltenden Dosiervorrichtung, in einer mit einem Wägelift automatisierten Waage oder in einer eine Wägezelle enthaltenden Vorrichtung zur Herstellung von Substanzformulierungen zu verwenden.

Der vorangehend erwähnte Wägelift ermöglicht das temporäre Entkoppeln beziehungsweise Koppeln des ganzen Wägegutträgers vom Lastaufnehmer, so dass eine Kontrolle oder Kalibrierung der Wägezelle ermöglicht wird. Alternativ dazu kann mit dem Wägelift auch nur die Mehrfachaufnahme von der Trägerstruktur abgehoben beziehungsweise auf diese aufgelegt werden, sofern dies zweckmässiger erscheint.

Insbesondere ist vorgesehen, dass das Laborgerät einen geschlossenen Windschutz aufweist, welcher in mindestens einer seiner seitlichen Schiebetüren eine Bedienungsöffnung mit einem Schieber beinhaltet. Der Windschutz umschliesst einen Wägeraum, in dessen Innern der Wägegutträger angeordnet ist. Die Bedienungsöffnung befindet sich zweckmässigerweise in nächster Nähe der oben erwähnten Rändelung oder der Fingerkuhlen der Mehrfachaufnahme und hat den Vorteil, dass für den schrittweisen Vortrieb der Mehrfachaufnahme jeweils nicht die ganze Windschutztüre sondern nur der Schieber geöffnet werden muss, damit die Mehrfachaufnahme durch eine einfache Fingerbewegung oder mittels eines Betätigungswerkzeugs gedreht werden kann. Ein Windschutz mit einer ähnlich ausgestalteten, mittels eines Schiebers verschliessbaren Beschickungsöffnung wird beispielsweise in der US 7 227 088 B2 offenbart, deren Inhalt hiermit vollumfänglich in die Beschreibung mit aufgenommen wird.

Das Laborgerät kann ferner einen motorischen Antrieb zum schrittweisen Vortrieb der Mehrfachaufnahme des Wägegutträgers aufweisen. Dadurch erübrigt sich eine Betätigung mit dem Finger oder mit einem Betätigungswerkzeug.

Schliesslich ist noch anzumerken, dass nicht die einzelnen Aufnahmestellen beziehungsweise die in den Aufnahmestellen befindlichen Einwaagegefässe gewogen werden, sondern immer der Wägegutträger mit den Einwaagegefässen und den darin eindosierten Substanzen. Zur Erfassung der jeweils in einem Einwaagegefäss befindlichen Substanzmasse muss demzufolge eine Differenzmessung vorgenommen werden, wobei nach jeder Dosierung vom erfassten Gewichtswert der vor der Dosierung erfasste Gewichtswert subtrahiert werden muss. Um den Wägebereich der Wägezelle nicht unnötig zu reduzieren, ist es wünschenswert, eine möglichst massenarme Ausgestaltung des Wägegutträgers mittels Aussparungen zu realisieren. Sofern das Taragewicht des Wägegutträgers immer dasselbe ist, kann die Wägezelle zu dessen Kompensation ein entsprechendes Gegengewicht aufweisen, wie es beispielsweise bei Massenkomparatoren üblich ist.

Der erfindungsgemässe Wägegutträger mit seinen Hauptbestandteilen und wesentlichen Details wird im Folgenden anhand eines Ausführungsbeispiels näher erläutert, wobei auf die Zeichnungen Bezug genommen wird. Darin zeigen
- Figur 1: den Wägeraum einer Laborwaage in dreidimensionaler Ansicht, worin man insbesondere die Anordnung des Wägegutträgers mit der Mehrfachaufnahme sowie der Bedienungsöffnung mit dem Schieber erkennen kann;
- Figur 2: den Wägegutträger in einer dreidimensionalen, schräg von unten her gerichteten Ansicht, worin die Mehrfachaufnahme von der Trägerstruktur gelöst, jedoch für das direkte Aufsetzen auf die Trägerstruktur ausgerichtet ist;
- Figur 3: eine Mehrfachaufnahme im auf die Trägerstruktur aufgesetzten Zustand in einer dreidimensionalen, schräg von oben her gerichteten Ansicht, zur Verdeutlichung mehrerer Einzelheiten der Erfindung;
- Figur 4: eine Positionierungsvorrichtung mit eingesetzter Mehrfachaufnahme in einer dreidimensionalen, schräg von unten her gerichteten Ansicht, zur Verdeutlichung der Funktionsweise der Positionierungsvorrichtung.

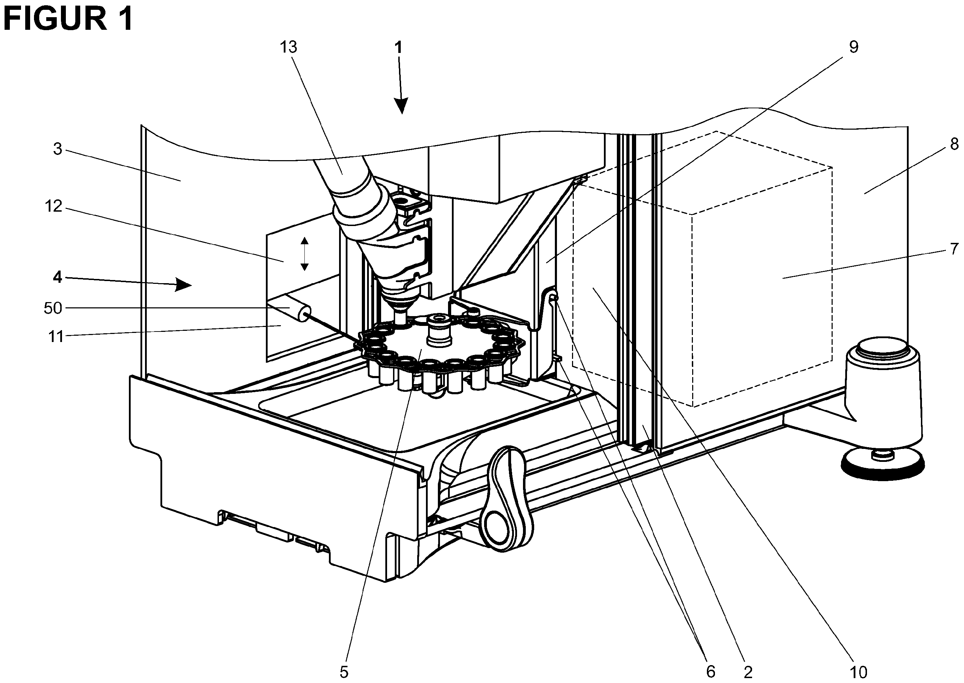

Figur 1 zeigt einen Teil eines Laborgerätes 1 beziehungsweise einer Laborwaage in einer dreidimensionalen, schräg von vorne her gerichteten Ansicht. Darin ist die dem Betrachter näherligende Windschutz-Seitenwand 2 geöffnet, die Vorderwand weggelassen und die fernerliegende Windschutz-Seitenwand 3 geschlossen. Der Blick ins Innere des Wägeraums 4 liegt somit frei, sodass man den Wägegutträger 5 erkennt, welcher an Lastaufnehmerstiften 6 der mit unterbrochener Linie angedeuteten Wägezelle 7 eingehängt ist, welche sich in einem vom Betrachter aus hintenliegenden Wägezellenabteil 8 der Waage 1 befindet. Von einem hier nicht gezeigten Lastaufnehmer der der mit unterbrochener Linie angedeuteten Wägezelle 7 ragen die Lastaufnehmerstifte 6 berührungsfrei durch seitliche Durchgangsöffnungen in einer vorspringenden Ausbuchtung 9 der Rückwand 10 des Wägeraumes 4. Ferner ist die Bedienungsöffnung 11 mit Schieber 12 ersichtlich, welche sich in der fernerliegenden Windschutz-Seitenwand 3 befindet und welche den Zugang für die weiter unten beschriebene Fingerbetätigung des Wägegutträgers 5 freigibt. Selbstverständlich kann anstelle einer Fingerbetätigung auch ein geeignetes Betätigungswerkzeug 50, beispielsweise eine Stange mit einem Haken vorhanden sein, so dass mit diesem und nicht mit dem Finger durch die Bedienungsöffnung 11 hindurch in den Wägeraum 4 hineingegriffen werden kann. Dabei kann der Haken des Betätigungswerkzeugs 50 beispielsweise an geeigneten Aussparungen oder Öffnungen des Wägegutträgers 5 angesetzt werden. Die Verwendung eines Betätigungswerkzeugs 50 verhindert, dass die Luft im Wägeraum 4 durch die Handwärme unnötig erwärmt wird.

Oberhalb des Wägegutträgers 5 in Figur 1 befindet sich eine Dosiervorrichtung 13, welche beispielsweise an der Rückwand 10 des Wägeraumes 4 leicht lösbar eingehängt ist und entlang von linearen Führungsmitteln (nicht dargestellt) zum Wägegutträger 5 hin abgesenkt sowie von diesem weg nach oben gefahren werden kann.

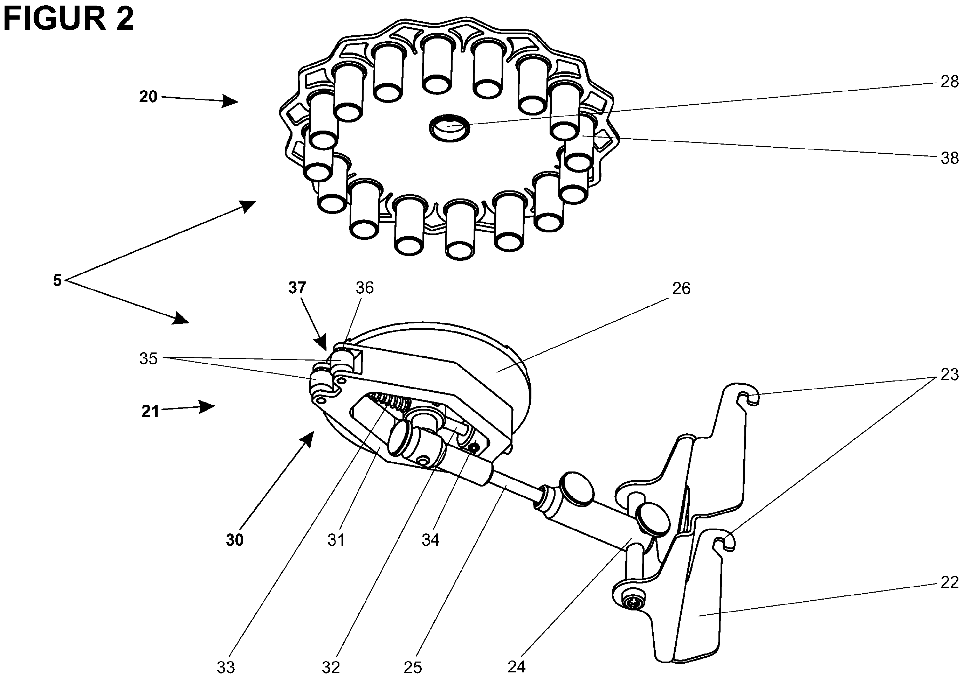

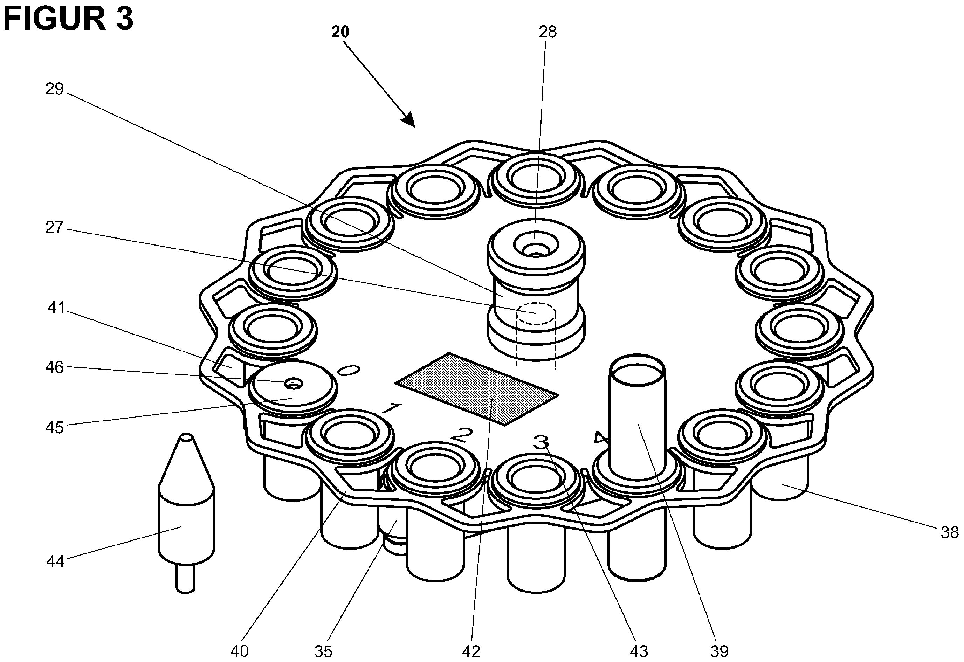

In Figur 2 wird der Wägegutträger 5 in einer dreidimensionalen Ansicht mit Blickrichtung schräg von unten her gezeigt, worin die Mehrfachaufnahme 20 von der Trägerstruktur 21 losgelöst, jedoch für das direkte Aufsetzen auf die Trägerstruktur 21 ausgerichtet ist. An der Trägerstruktur 21 erkennt man das Kupplungsteil 22 mit den Einhängehaken 23, womit der Wägegutträger 5 an den oben erwähnten Lastaufnehmerstiften 6 der Wägezelle 7 eingehängt werden kann. Mit dem Kupplungsteil 22 ist über eine fixierbare Gelenkstelle 24 und ein teleskopisch verschiebbares und fixierbares Verbindungsglied 25 die Trägerplatte 26 verbunden, auf welcher die Mehrfachaufnahme 20 aufgelegt werden kann. Die Mehrfachaufnahme 20 ist auf der Trägerplatte 26 karussellartig drehbar. Als Schwenk- oder Drehführung für die Karussellbewegung dient ein nach oben gerichteter zentrischen Stift oder Zapfen 27 (in Figur 3 mit unterbrochener Linie dargestellt) der Trägerplatte 26, welcher mit einer zentrischen Bohrung 28 in einer Nabe 29 (siehe Figur 3) der Mehrfachaufnahme 20 zum Eingriff kommt. Somit dient die Trägerplatte 26 in Verbindung mit dem Zapfen 27 und der zentrischen Bohrung 20 als Führung und Halterung.

Unterhalb der Trägerplatte 26 ist die Positionierungsvorrichtung 30 angeordnet, welche hier als länglicher sechseckiger Rahmen 31 ausgebildet ist und welcher entlang einer Führungsschiene 32, relativ zur Trägerplatte 26 linear verschiebbar und durch eine Druckfeder 33 gegen eine einstellbare Anschlagsmuffe 34 vorgespannt ist. An seinem dem Kupplungsteil 22 abgewandten Ende trägt der Rahmen 31 zwei Positionierungsrollen 35, deren Funktion weiter unten noch näher beschrieben wird.

Die karussellartig ausgebildete Mehrfachaufnahme 20, welche in Figur 2 perspektivisch mit Blickrichtung schräg von unten und in Figur 3 schräg von oben dargestellt ist, hat wie oben erwähnt in ihrem Zentrum eine Nabe 29, welche die Bohrung 28 enthält. Um das Aufsetzen der Mehrfachaufnahme 20 auf die Trägerplatte 26 zu erleichtern, können der Stift oder Zapfen 27 der Trägerplatte 26 und/oder die Bohrung 28 der Nabe 29 konisch ausgebildet sein. Entlang dem Umfang der Mehrfachaufnahme 20 sind in regelmässigen Abständen die Aufnahmestellen 38 angeordnet, zum Beispiel in der Form von zylindrischen Bechern oder Hülsen. Normalerweise wird das Wägegut nicht direkt in die Aufnahmestellen 38 dosiert, sondern in passende Einwaagegefässe 39, welche in die Aufnahmestellen 38 eingesetzt werden. Am Aussenrand ist die Mehrfachaufnahme 20 mit einer Rändelung 40 sowie mit Ausnehmungen 41 (Kuhlen) versehen, welche die Fingerbetätigung zum schrittweisen Drehen der Mehrfachaufnahme 20 erleichtern. Ferner kann die Aussenkontur der Nabe 29 ergonomisch ausgeformt sein, so dass die Mehrfachaufnahme 20 während des Aufsetzens auf die Trägerplatte 26 beziehungsweise eines Entfernens von dieser gut und sicher in der Hand gehalten werden kann, ohne mit den Fingern in die Nähe der Aufnahmestellen 38 zu gelangen.

Beim Aufsetzen der Mehrfachaufnahme 20 auf die Trägerstruktur 21 gelangt, wie bereits erwähnt, die Bohrung 28 mit einem zentrischen Lagerstift oder Zapfen 27 der Trägerplatte 26 in Eingriff. Gleichzeitig muss auch eine der Aufnahmestellen 38 in die Beschickungsposition 37 eingeführt werden. Damit die einzuführende Aufnahmestelle 38 einfach durch leichten Druck von oben ihren Platz zwischen den Positionierungsrollen 35 einnehmen kann, sind die Positionierungsrollen 35 an ihrer der Mehrfachaufnahme 20 zugewandten Stirnseite mit einer konischen Fase oder Anschrägung 36 versehen, so dass die mittels der Feder vorgespannte Positionierungsvorrichtung 30 beim Einführen der Aufnahmestelle 38 von derselben in Richtung des Kupplungsteils 22 gedrängt wird.

Figur 3 zeigt ausserdem als Beispiel die Identifikation 42 einer Mehrfachaufnahme 20, insbesondere mit einem Barcode oder RFID Chip sowie die Identifikation der individuellen Aufnahmestellen 38 durch eine Nummerierung 43. Die gezeigte Mehrfachaufnahme 20 kann ausserdem mit einer Ausrichtungshilfe 44 und einem Positionszeiger 45 versehen sein.

Der Positionszeiger 45 gewährleistet oder unterstützt zumindest das korrekte Einsetzen der Mehrfachaufnahme 20 in einer Ausgangsstellung für eine Einwägeserie sowie den korrekten Abschluss der Serie nachdem eine vorgeschriebene Anzahl von Einwägungen ausgeführt wurde. Sofern eine variable Kennzeichnung einer Endstellung gewünscht ist, kann ein Positionszeiger 45 durch Aufsetzen eines oder mehrerer Deckel auf einer der Aufnahmestellen 38 realisiert werden.

Die Ausrichtungshilfe 44 dient der einmaligen Ausrichtung und Fixierung der in Figur 2 dargestellten Trägerstruktur 21 zu einer vorgegebenen Beschickungsposition, beispielsweise zu einer Auslassöffnung der in Figur 1 dargestellten Dosiervorrichtung 13. Die Ausrichtungshilfe 44 kann zum Beispiel als erhabene Spitze in eine Bohrung 46 des Positionszeigers 45 eingesetzt werden oder direkt auf der Mehrfachaufnahme 20 ausgebildet sein. Selbstverständlich kann die Ausrichtungshilfe 44 gleichzeitig als Positionszeiger verwendet werden.

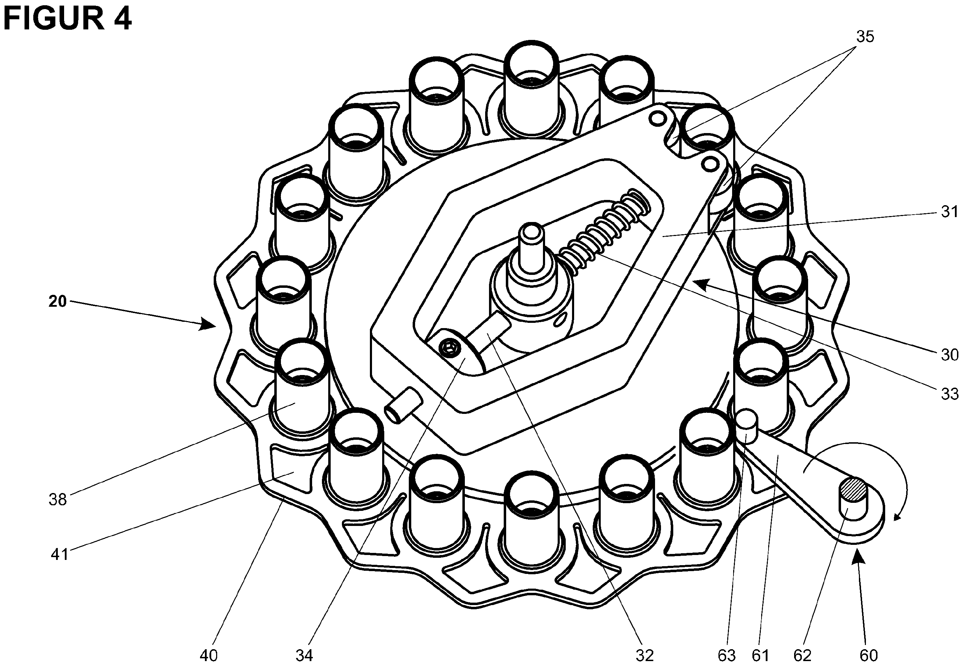

Zur Erläuterung der Funktionsweise der Positionierungsvorrichtung 30 ist diese in Figur 4 mit der Trägerplatte 26 der Trägerstruktur 21 und mit eingesetzter Mehrfachaufnahme 20 mit Blickrichtung schräg von unten dargestellt. In einer Serie von Einwägungen oder Dosierungen wird von der Dosiervorrichtung (siehe auch Figur 2) eine vorbestimmte Substanzmenge in die momentan in der Beschickungsposition 37 befindliche Aufnahmestelle 38 oder ein darin sitzendes Einwaagegefäss 39 dosiert. Dann wird durch Fingerbetätigung die nächstfolgende Aufnahmestelle 38 in die Beschickungsposition 37 gebracht, worauf die nächste Dosierung erfolgt. Dank der Positionierungsvorrichtung 30 ist keine diffizile Manipulation notwending, um eine Aufnahmestelle 38 genau in die Beschickungsposition zu 37 bringen. Sobald nämlich eine Aufnahmestelle 38 in den Bereich zwischen den zwei Positionierungsrollen 35 gebracht wird, wobei die Vorspannkraft der Feder 33 zu überwinden ist, wird die Aufnahmestelle 38 durch die gefederten Positionierungsrollen 35 vollends in die Beschickungsposition 37 gedrückt und dort festgehalten, wie es in Figur 4 gezeigt wird. Wie nachfolgend erläutert wird, erleichtert das Vorhandensein der Positionierungsvorrichtung 30 auch eine Automatisierung des schrittweisen, seriellen Vortriebs der Aufnahmestellen 38 in die Beschickungsposition.

Ein in Figur 4 nicht dargestelltes Laborgerät kann ferner einen motorischen Antrieb 60 zur Betätigung der Mehrfachaufnahme 20 aufweisen, von welchem Antrieb 60 nur dessen Antriebswelle 62 und der Mitnehmer 62 dargestellt ist. Zum schrittweisen Vortrieb der Mehrfachaufnahme 20 des Wägegutträgers 5 rotiert die Antriebswelle 62 um ihre Längsachse, wobei pro Schritt jeweils eine ganze Umdrehung erforderlich ist. Der Mitnehmer 62 ist derart positioniert und ausgerichtet, das ein am Mitnehmer 61 angeordneter Mitnehmerbolzen 63 zwischen die Aussenkonturen jeweils zweier benachbarter Aufnahmestellen 38 eingreift, wobei die Lücke zwischen den Aussenkonturen wesentlich grösser bemessen ist als der Durchmesser des Mitnehmerbolzens 63. Somit besteht ein grosses Spiel zwischen dem Mitnehmerbolzen 63 und der Mehrfachaufnahme20. Bei einer Umdrehung des Mitnehmers liegt, wie dargestellt, der Startpunkt und Endpunkt des Mitnehmerbolzens 63 auf seiner Umlaufbahn zwischen den Aussenkonturen zweier benachbarter Aufnahmestellen 38, ohne diese zu berühren. Da die Positionierungsvorrichtung 30 die Aufnahmestellen 38 genau in die Beschickungsposition bringt, wird dadurch nach jedem schrittweisen Vortrieb die Mehrfachaufnahme 20 vollständig vom Mitnehmer 60 getrennt. Dies ist absolut notwendig, da eine Berührung des Mitnehmers 60 und der Mehrfachaufnahme 20 zu einer teilweisen Abstützung der Mehrfachaufnahme 20 und dadurch zu einer Verfälschung des Wägeergebnisses führen würde. Selbstverständlich kann der Mitnehmer 60 auch mehrere Mitnehmerbolzen 63 aufweisen.

In der Regel bleibt die Trägerstruktur des Wägegutträgers sowie auch die Dosiervorrichtung an der Waage eingehängt, solange fortgesetzt Einwägeserien durchgeführt werden, und wird erst entfernt, wenn die Waage für eine andere Anwendung, beispielsweise für manuelle Einzelwägungen, umgerüstet wird. Hingegen kann es vorteilhaft sein, wenn man die Mehrfachaufnahme jeweils ausserhalb der Waage mit Einwaagegefässen bestückt, diese nach Abschluss einer Einwägeserie aus der Waage herausnimmt und die gefüllten Einwaagegefässe durch leere Einwaagegefässe ersetzt. Die Mehrfachaufnahme kann ausserhalb der Waage auch auf eine ebene Platte oder eine geeignete Aufnahmestruktur gelegt werden und die Einwaagegefässe können mit Verschlussdeckel verschlossen werden. Selbstverständlich kann auch ein Verschlussautomat vorhanden sein, in welchen eine befüllte Mehrfachaufnahme einsetzbar ist wobei die Einwaagegefässe durch den Verschlussautomat automatisch mit Verschlussdeckeln versehen werden.
Es kann ferner zweckmässig sein, dass an einem Wägeplatz mehrere Mehrfachaufnahmen zur Verfügung stehen, so dass beispielsweise eine Mehrfachaufnahme von einer Person mit Einwaagegefässen bestückt wird, während eine andere Person mit einer zweiten Mehrfachaufnahme eine Einwägeserie durchführt. Ausserdem kann es nützlich sein, über Mehrfachaufnahmen zu verfügen welche mit unterschiedlichen, kundenspezifisch gestalteten und/oder auswechselbaren Aufnahmestellen versehen sind.

### Bezugszeichenliste

- 1: Laborgerät
- 2: Windschutz-Seitenwand
- 3: Windschutz-Seitenwand
- 4: Wägeraum
- 5: Wägegutträger
- 6: Lastaufnehmerstifte
- 7: Wägezelle
- 8: Wägezellenabteil
- 9: Ausbuchtung von 10
- 10: Rückwand
- 11: Bedienungsöffnung
- 12: Schieber
- 13: Dosiervorrichtung
- 20: Mehrfachaufnahme
- 21: Trägerstruktur
- 22: Kupplungsteil
- 23: Einhängehaken
- 24: fixierbare Gelenkstelle
- 25: teleskopisch verschiebbares und fixierbares Verbindungsglied
- 26: Trägerplatte
- 27: Stift oder Zapfen von 26
- 28: zentrische Bohrung in 29
- 29: Nabe
- 30: Positionierungsvorrichtung
- 31: Rahmen von 30
- 32: Führungsschiene
- 33: Druckfeder
- 34: einstellbare Anschlagmuffe
- 35: Positionierungsrollen
- 36: Fase oder Anschrägung von 35
- 37: Beschickungs- oder Dosierposition
- 38: Aufnahmestellen
- 39: Einwaagegefäss
- 40: Rändelung
- 41: Fingerkuhlen (Ausnehmungen, Durchbrüche)
- 42: Identifikation der Mehrfachaufnahme
- 43: Nummerierung der Aufnahmestellen
- 44: Ausrichtungshilfe
- 45: Positionszeiger
- 46: Bohrung
- 50: Betätigungswerkzeug
- 60: motorischer Antrieb
- 61: Mitnehmer
- 62: Antriebswelle
- 63: Mitnehmerbolzen

## Patentansprüche

1. Wägegutträger (5) für eine Wägezelle (7), welcher Wägegutträger (5) mit einem Lastaufnehmer (6) der Wägezelle (7) verbindbar ist und welcher Wägegutträger (5) eine Trägerstruktur (21) und eine Mehrfachaufnahme (20) aufweist, wobei
• die Trägerstruktur (21) eine Kupplung (22) zum Koppeln der Trägerstruktur (21) mit dem Lastaufnehmer (6) sowie eine Führung und Halterung (26, 27, 28) aufweist mit welcher die Mehrfachaufnahme (20) beweglich mit der Trägerstruktur (21) verbunden werden kann und
• die Mehrfachaufnahme (20) mit der Trägerstruktur (21), beziehungsweise mit deren Führung und Halterung (26, 27, 28) durch einfaches Auflegen oder Einschieben verbindbar ist und durch die Führung und Halterung (26, 27, 28) relativ zur Trägerstruktur (21) führbar ist,
**dadurch gekennzeichnet, dass**
• die Mehrfachaufnahme (20) mindestens zwei Aufnahmestellen (38) aufweist, wobei die Aufnahmestellen (38) so angeordnet sind, dass durch eine Drehbewegung der Mehrfachaufnahme (20) jede der Aufnahmestellen (38) nacheinander in eine bestimmte, feststehende Beschickungsposition (37) bringbar ist und
• die Aufnahmestellen (38) auf einer Kreisbahn oder einem Kreisbahnabschnitt angeordnet sind und
• eine zwischen der Trägerstruktur (21) und der Mehrfachaufnahme (20) wirkende Positionierungsvorrichtung (30) vorhanden ist, mittels welcher Positionierungsvorrichtung (30) die jeweils in die Beschickungsposition (37) bringbare Aufnahmestelle (38) in der Beschickungsposition (37) präzise positionierbar ist.

2. Wägegutträger (5) nach Anspruch 1, **dadurch gekennzeichnet, dass** die Trägerstruktur (21) zwischen der Kupplung (22) und der Führung und Halterung (26, 27, 28) mindestens eine fixierbare Gelenkstelle (24) und/oder mindestens ein teleskopisches Verbindungsglied (25) aufweist.

3. Wägegutträger (5) nach Anspruch 1 oder 2, **dadurch gekennzeichnet, dass** die Positionierungsvorrichtung (30) zur Trägerstruktur (21) linear verschiebbar angeordnet ist und zwischen der Trägerstruktur (21) und der Positionierungsvorrichtung (30) ein Federelement (33) angeordnet ist.

4. Wägegutträger (5) nach Anspruch 3, **dadurch gekennzeichnet, dass** die Positionierungsvorrichtung (30) zwei Positionierungsrollen (35) aufweist und dass infolge der Federkraft des Federelements (33) die Positionierungsrollen (35) gegen eine Aussenkontur der Aufnahmestelle (38) gepresst werden, wobei die Aussenkontur zwischen den beiden Positionierungsrollen (35) angeordnet ist.

5. Wägegutträger (5) nach Anspruch 4, **dadurch gekennzeichnet, dass** die Positionierungsrollen (35) zwecks einfacheren Auflegens der Mehrfachaufnahme (20) stirnseitig Fasen (36) aufweisen.

6. Wägegutträger (5) nach einem der Ansprüche 1 bis 5, **dadurch gekennzeichnet, dass** die Mehrfachaufnahme (20) eine Ausrichtungshilfe (44) und/oder einen Positionszeiger (45) aufweist.

7. Wägegutträger (5) nach einem der Ansprüche 1 bis 6, **dadurch gekennzeichnet, dass** die Mehrfachaufnahme (20) Identifikationsmittel (42, 43) aufweist.

8. Wägegutträger (5) nach einem der Ansprüche 1 bis 7, **dadurch gekennzeichnet, dass** die Mehrfachaufnahme (20) becherförmig ausgestaltete Aufnahmestellen (38) mit zylindrischer Aussenkontur aufweist.

9. Wägegutträger nach einem der Ansprüche 1 bis 8, **dadurch gekennzeichnet, dass** die Mehrfachaufnahme (20) zur Verbesserung der manuellen Bedienbarkeit der nacheinander in die Beschickungsposition (37) zu bringenden Aufnahmestellen (38) eine Rändelung (40) oder mehrere Fingerkuhlen (41) aufweist.

10. Laborgerät (1), insbesondere eine Waage, eine, eine Wägezelle enthaltende Dosiervorrichtung, eine mit einem Wägelift automatisierte Waage oder eine, eine Wägezelle enthaltende Vorrichtung zur Herstellung von Substanzformulierungen, **dadurch gekennzeichnet, dass** dieses mindestens einen Wägegutträger (5) nach einem der Ansprüche 1 bis 9 aufweist.

11. Laborgerät (1) nach Anspruch 10, **dadurch gekennzeichnet, dass** dieses einen geschlossenen Windschutz aufweist, welcher an mindestens einer seiner Seitenwände (2, 3) eine Bedienungsöffnung (11) mit einem Schieber (12) beinhaltet.

12. Laborgerät (1) nach Anspruch 10 oder 11, **dadurch gekennzeichnet, dass** dieses einen motorischen Antrieb (60) zum schrittweisen Vortrieb einer Mehrfachaufnahme (20) des Wägegutträgers (5) aufweist.

## Claims

1. Weighing object carrier (5) for a weighing cell (7), wherein said weighing object carrier (5) can be connected to a load receiver (6) of a weighing cell (7), wherein said weighing object carrier (5) comprises a supporting structure (21) and a multi-compartment weighing tray (20), and wherein
• the supporting structure (21) includes a coupling element (22) serving to couple the supporting structure (21) to the load receiver (6), and further includes a guiding and constraining element (26, 27, 28) through which the multi-compartment weighing tray (20) can be movably connected to the supporting structure (21), and wherein further
• the multi-compartment weighing tray (20) is designed to be connected to the supporting structure (21) or, more specifically, to the guiding and constraining element (26, 27, 28) of the supporting structure (21) by simply seating or sliding the multi-compartment weighing tray (20) into position, and wherein the multi-compartment weighing tray (20) can be guided by the guiding and constraining element (26, 27, 28) for guided movement of the multi-compartment weighing tray (20) relative to the supporting structure (21),
**characterized in that**
• the multi-compartment weighing tray (20) has at least two receiving compartments (38) arranged so that, through a rotary movement of the multi-compartment weighing tray (20), each of the receiving compartments (38) can be brought sequentially into a defined, fixed loading position (37), and
• the receiving compartments (38) are arranged on a travel path in the shape of a full circle or part of a circle, and
• there is a positioning device (30) acting between the supporting structure (21) and the multi-compartment weighing tray (20), whereby the receiving compartment (38) that is currently next to be moved into the loading position (37) can be precisely set into the loading position (37).

2. Weighing object carrier (5) according to claim 1, **characterized in that** the supporting structure (21) comprises at least one pivoting joint (24) that can be locked in position and/or at least one telescopic connecting member (25), said pivoting joint and/or telescopic connecting member being arranged between the coupling element (22) and the guiding and constraining element (26, 27, 28).

3. Weighing object carrier (5) according to claim 1 or 2, **characterized in that** the positioning device (30) is arranged with linear mobility relative to the supporting structure (21) and that a spring element (33) is arranged between the supporting structure (21) and the positioning device (30).

4. Weighing object carrier (5) according to claim 3, **characterized in that** the positioning device (30) comprises two positioning rollers (35) and that as a result of the spring force of the spring element (33), the positioning rollers (35) are pressed against an outside contour of the receiving compartment (38), said outside contour being disposed between the two positioning rollers (35).

5. Weighing object carrier (5) according to claim 4, **characterized in that** the positioning rollers (35) have beveled edges (36) at their ends to make it easier to set the multi-compartment weighing tray (20) into place.

6. Weighing object carrier (5) according to one of the claims 1 to 5, **characterized in that** the multi-compartment weighing tray (20) comprises an alignment aid (44) and/or a position indicator (45).

7. Weighing object carrier (5) according to one of the claims 1 to 6, **characterized in that** the multi-compartment weighing tray (20) comprises identifier means (42, 43).

8. Weighing object carrier (5) according to one of the claims 1 to 7, **characterized in that** the multi-compartment weighing tray (20) comprises cup-shaped receiving compartments (38) with a cylindrical outside contour.

9. Weighing object carrier according to one of the claims 1 to 8, **characterized in that** the multi-compartment weighing tray (20) comprises a knurled perimeter surface (40) or a plurality of finger holds (41) to improve the manual operation of bringing the receiving compartments (38) one after another into the loading position (37).

10. Laboratory instrument (1), in particular a balance, a dosage-dispensing device comprising a weighing cell, a balance automated with a load-lifting device, or a device comprising a weighing cell and serving to prepare substance formulations, **characterized in that** said laboratory instrument (1) comprises at least one weighing object carrier (5) according to one of the claims 1 to 9.

11. Laboratory instrument (1) according to claim 10, **characterized in that** the laboratory instrument (1) comprises an enclosed draft shield compartment, at least one of whose sidewalls (2, 3) has an operator access opening (11) with a sliding shutter (12).

12. Laboratory instrument (1) according to claim 10 or 11, **characterized in that** the laboratory instrument (1) comprises a motorized drive mechanism (60) for the stepwise advance of a multi-compartment weighing tray (20) of the weighing object carrier (5).

## Revendications

1. Support de produit à peser (5) pour une cellule de pesage (7), lequel support de produit à peser (5) peut être relié à un récepteur de charge (6) de la cellule de pesage (7) et lequel support de produit à peser (5) présente une structure de support (21) et un logement multiple (20), dans lequel
- la structure de support (21) présente un accouplement (22) pour le couplage de la structure de support (21) au récepteur de charge (6) ainsi qu'un guidage et une fixation (26, 27, 28) avec laquelle le logement multiple (20) peut être relié de manière mobile à la structure de support (21) et
- le logement multiple (20) peut être relié à la structure de support (21), respectivement à son guidage et fixation (26, 27, 28), par simple pose ou insertion et peut être guidé par le guidage et la fixation (26, 27, 28) par rapport à la structure de support (21),
**caractérisé en ce que**
- le logement multiple (20) présente au moins deux postes de réception (38), dans lequel les postes de réception (38) sont agencés de sorte que chacun des postes de réception (38) peut être amené l'un après l'autre dans une position de chargement (37) stationnaire déterminée par un mouvement de rotation du logement multiple (20), et
- les postes de réception (38) sont agencés sur une trajectoire circulaire ou une section de trajectoire circulaire et
- un dispositif de positionnement (30) agissant entre la structure de support (21) et le logement multiple (20) est présent, au moyen duquel dispositif de positionnement (30), le poste de réception (38) pouvant être amené respectivement dans la position de chargement (37) est positionnable de façon précise dans la position de chargement (37).

2. Support de produit à peser (5) selon la revendication 1, **caractérisé en ce que** la structure de support (21) présente entre l'accouplement (22) et le guidage et la fixation (26, 27, 28) au moins un point d'articulation (24) pouvant être fixé et/ou au moins un organe de liaison télescopique (25).

3. Support de produit à peser (5) selon la revendication 1 ou 2, **caractérisé en ce que** le dispositif de positionnement (30) est agencé en coulissement linéaire par rapport à la structure de support (21) et un élément ressort (33) est agencé entre la structure de support (21) et le dispositif de positionnement (30).

4. Support de produit à peser (5) selon la revendication 3, **caractérisé en ce que** le dispositif de positionnement (30) présente deux galets de positionnement (35) et que les galets de positionnement (35) sont pressés du fait de la force élastique de l'élément ressort (33) contre un contour extérieur du poste de réception (38), dans lequel le contour extérieur est agencé entre les deux galets de positionnement (35).

5. Support de produit à peser (5) selon la revendication 4, **caractérisé en ce que** les galets de positionnement (35) présentent côté frontal des chanfreins (36) pour faciliter la pose du logement multiple (20).

6. Support de produit à peser (5) selon l'une quelconque des revendications 1 à 5, **caractérisé en ce que** le logement multiple (20) présente une aide à l'orientation (44) et/ou un indicateur de position (45).

7. Support de produit à peser (5) selon l'une quelconque des revendications 1 à 6, **caractérisé en ce que** le logement multiple (20) présente des moyens d'identification (42, 43).

8. Support de produit à peser (5) selon l'une quelconque des revendications 1 à 7, **caractérisé en ce que** le logement multiple (20) présente des postes de réception (38) configurés en forme de gobelet à contour extérieur cylindrique.

9. Support de produit à peser selon l'une quelconque des revendications 1 à 8, **caractérisé en ce que** le logement multiple (20) présente un moletage (40) ou plusieurs trous pour doigt (41) pour améliorer l'opérabilité manuelle des postes de réception (38) à amener l'un après l'autre dans la position de chargement (37).

10. Appareil de laboratoire (1), en particulier une balance, un dispositif de dosage contenant une cellule de pesage, une balance automatisée avec un lève-balance ou un dispositif de production de formulations de substances contenant une cellule de pesage, **caractérisé en ce qu'**il présente au moins un support de produit à peser (5) selon l'une quelconque des revendications 1 à 9.

11. Appareil de laboratoire (1) selon la revendication 10, **caractérisé en ce que** celui-ci présente un paravent fermé qui contient une ouverture de commande (11) avec un coulisseau (12) au niveau d'au moins une de ses parois latérales (2, 3).

12. Appareil de laboratoire (1) selon la revendication 10 ou 11, **caractérisé en ce que** celui-ci présente un entraînement motorisé (60) pour l'avancement pas à pas d'un logement multiple (20) du support de produit à peser (5).
